# EUROPEAN PATENT APPLICATION

(11) **EP 4 800 990 A1**
(43) Date of publication of application: **02.09.2026**
(21) Application number: 24882875.8
(22) Date of filing: 24.10.2024
(51) Int. Cl.: H04L 27/26, H04L 5/00, H04L 1/1812

(54) **WIRELESS COMMUNICATION METHOD AND APPARATUS BASED ON MULTIPLE MODULATION SCHEME**

(30) Priority: 24.10.2023 KR 20230143136
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Plasseraud IP
(86) International application number: PCT/KR2024/016338
(87) International publication number: WO 2025/089848

(57) **Abstract**

An operation method for a first device (100) in a wireless communication system is proposed. The method may comprise the steps of: carrying out, to a second device (200), inter-device control channel transmission related to first inter-device transmission modulated on the basis of a first modulation scheme, wherein the first modulation scheme is a time-frequency domain-based modulation scheme; and carrying out, to the second device (200), the first inter-device transmission modulated on the basis of a second modulation scheme, wherein the second modulation scheme is a delay-Doppler domain-based modulation scheme.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method may be proposed. For example, the method may comprise: performing, to a second device, an inter-device control channel transmission related to a first inter-device transmission, modulated based on a first modulation scheme, wherein the first modulation scheme may be a modulation scheme based on a time-frequency domain; and performing, to the second device, the first inter-device transmission modulated based on a second modulation scheme, wherein the second modulation scheme may be a modulation scheme based on a delay-Doppler domain.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

According to an embodiment of the present disclosure, a non-transitory computer-readable storage medium storing instructions may be proposed. For example, the instructions, based on being executed, may cause a first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

According to an embodiment of the present disclosure, a method may be proposed. For example, the method may comprise: receiving, from a first device, an inter-device control channel transmission related to a first inter-device transmission, modulated based on a first modulation scheme, wherein the first modulation scheme may be a modulation scheme based on a time-frequency domain; and receiving, from the first device, the first inter-device transmission modulated based on a second modulation scheme, wherein the second modulation scheme may be a modulation scheme based on a delay-Doppler domain.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, an inter-device control channel transmission related to a first inter-device transmission, modulated based on a first modulation scheme, wherein the first modulation scheme may be a modulation scheme based on a time-frequency domain; and receive, from the first device, the first inter-device transmission modulated based on a second modulation scheme, wherein the second modulation scheme may be a modulation scheme based on a delay-Doppler domain.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a modulation scheme of an orthogonal time frequency space scheme in which a localized waveform may be generated in both dimensions, according to an embodiment of the present disclosure.
FIG. 10 shows a pulseone waveform in a time domain and a frequency domain, according to an embodiment of the present disclosure.
FIG. 11 shows a system for implementing a transformation between a delay-Doppler domain signal and a time-frequency domain signal, according to an embodiment of the present disclosure.
FIG. 12 shows a relationship between a delay-Doppler grid and a time-frequency grid, according to an embodiment of the present disclosure.
FIG. 13 shows control signal transmission and data transmission performed by applying different modulation schemes, according to an embodiment of the present disclosure.
FIG. 14 shows a feedback resource for which whether to be used for a feedback operation is determined according to a modulation scheme applied to data transmission, according to an embodiment of the present disclosure.
FIG. 15 shows the same reference signal used for different data transmissions, according to an embodiment of the present disclosure.
FIG. 16 shows correlation information between channel information measured in transmission based on a resource region to which a modulation scheme in a delay-Doppler domain is applied and channel information related to a time-frequency domain, according to an embodiment of the present disclosure.
FIG. 17 shows a procedure of operations that may be performed by a first device according to an embodiment of the present disclosure.
FIG. 18 shows a procedure of operations that may be performed by a second device according to an embodiment of the present disclosure.
FIG. 19 shows a communication system 1, based on an embodiment of the present disclosure.
FIG. 20 shows wireless devices, based on an embodiment of the present disclosure.
FIG. 21 shows a signal process circuit for a transmission signal, based on an embodiment of the present disclosure.
FIG. 22 shows another example of a wireless device, based on an embodiment of the present disclosure.
FIG. 23 shows a hand-held device, based on an embodiment of the present disclosure.
FIG. 24 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

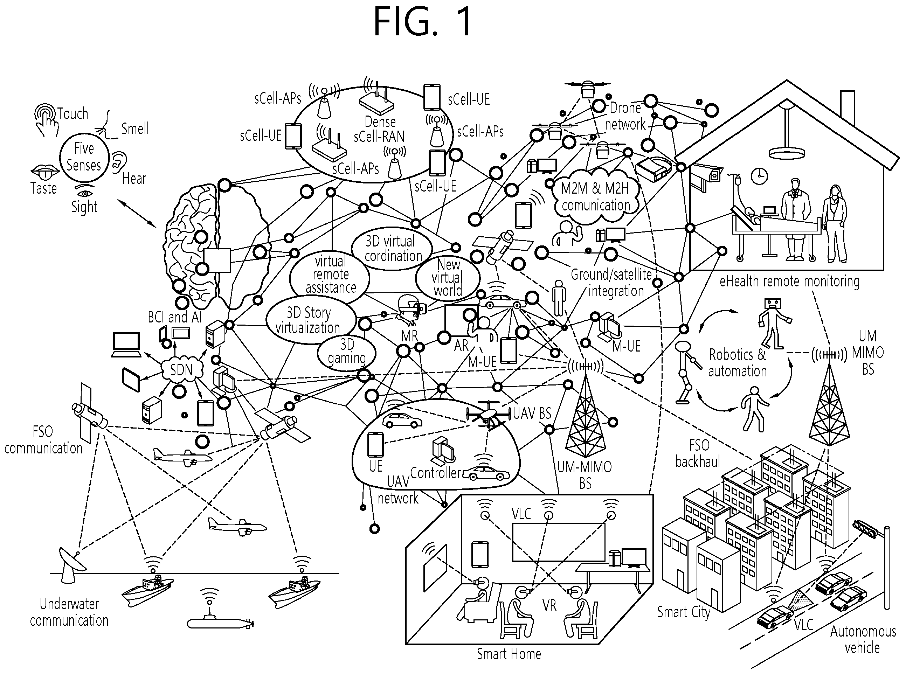

FIG. 1 shows a communication structure that can be provided in a 6G system, according to one embodiment of the present disclosure. The embodiment of FIG. 1 may be combined with various embodiments of the present disclosure.

In 6G, new network features may include the following.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

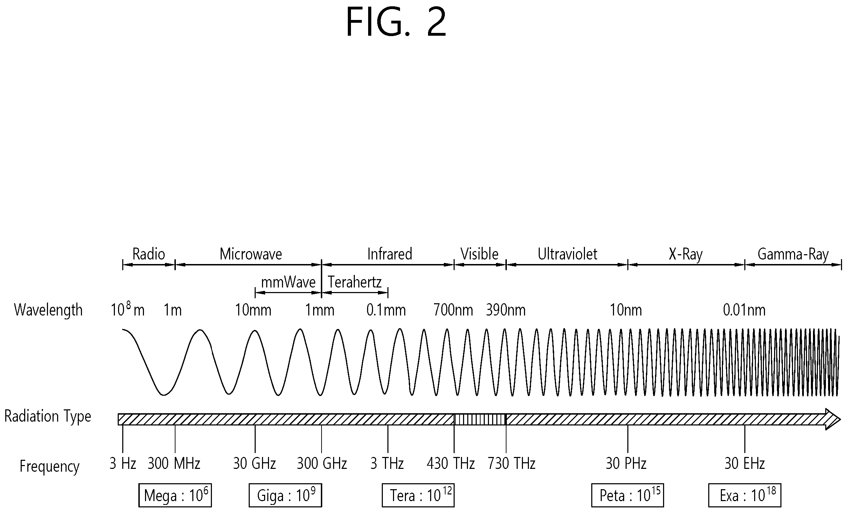

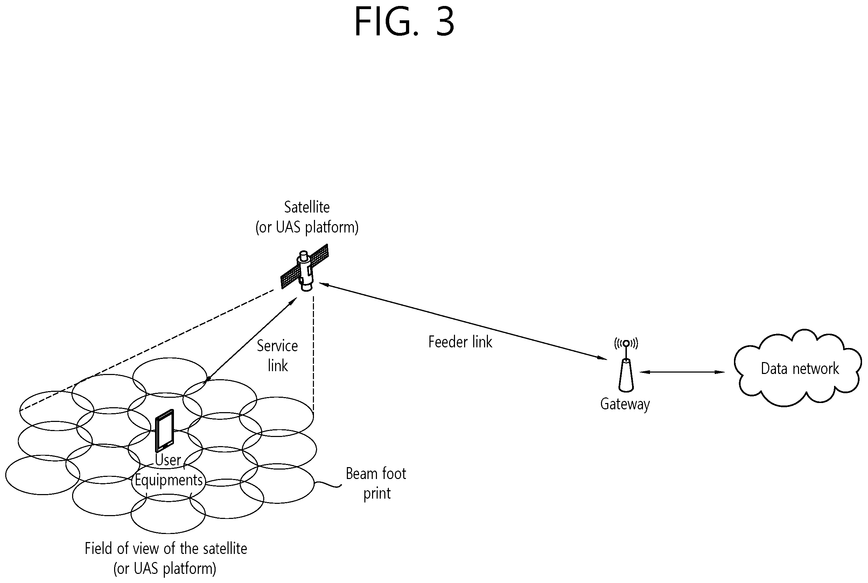

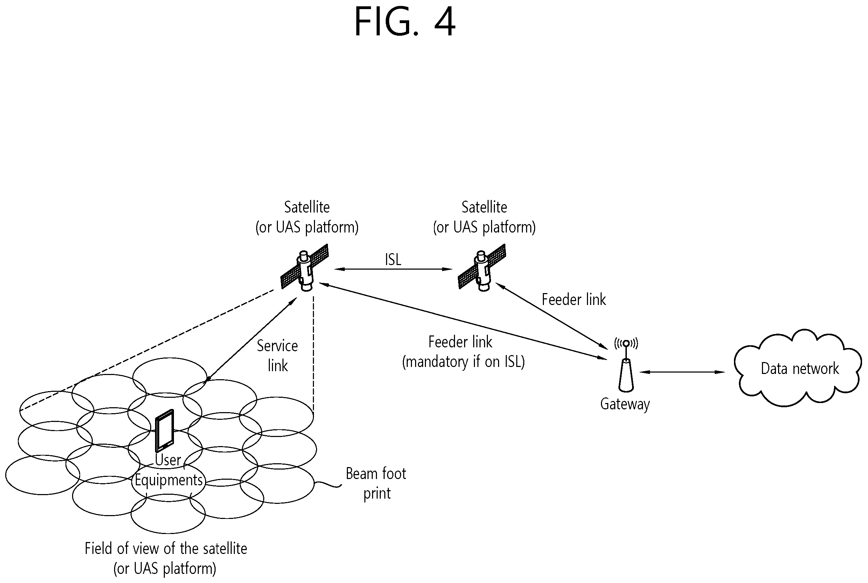

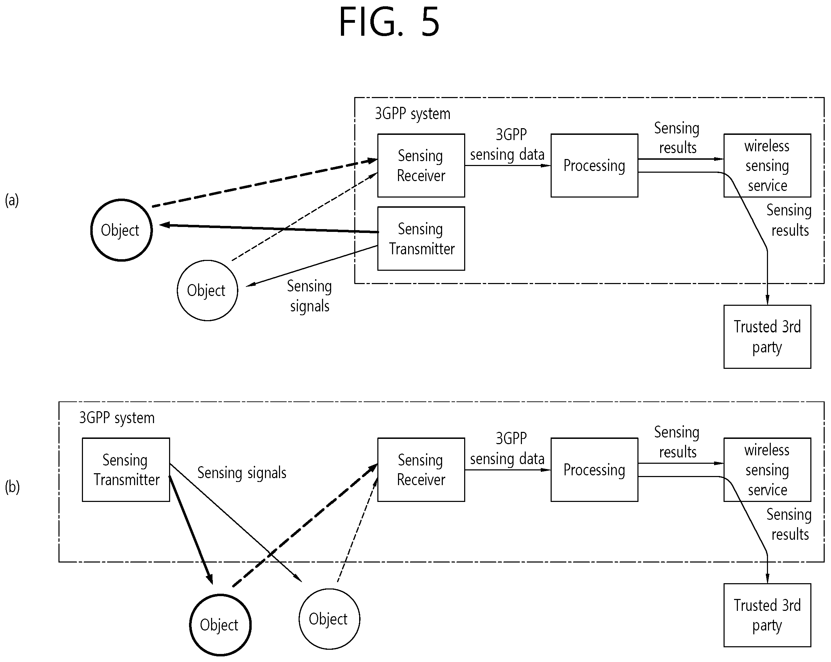

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

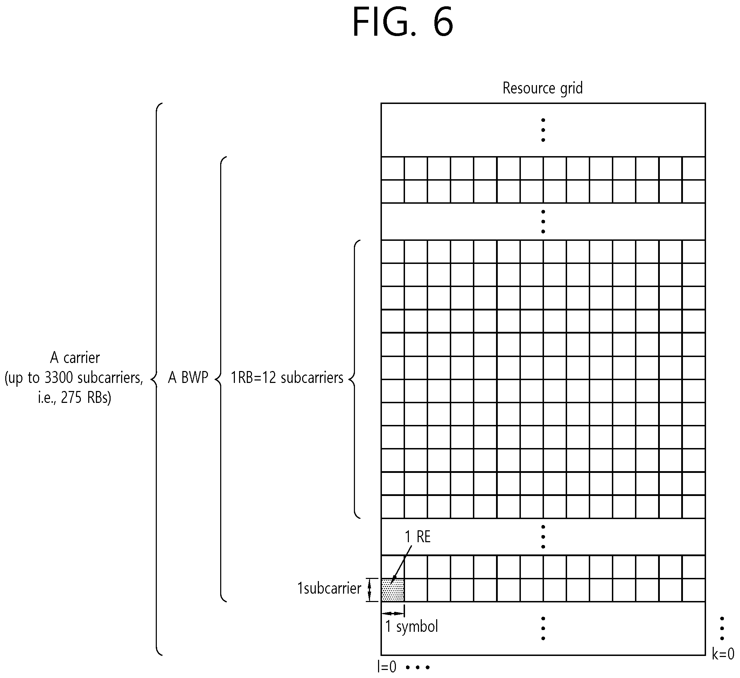

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

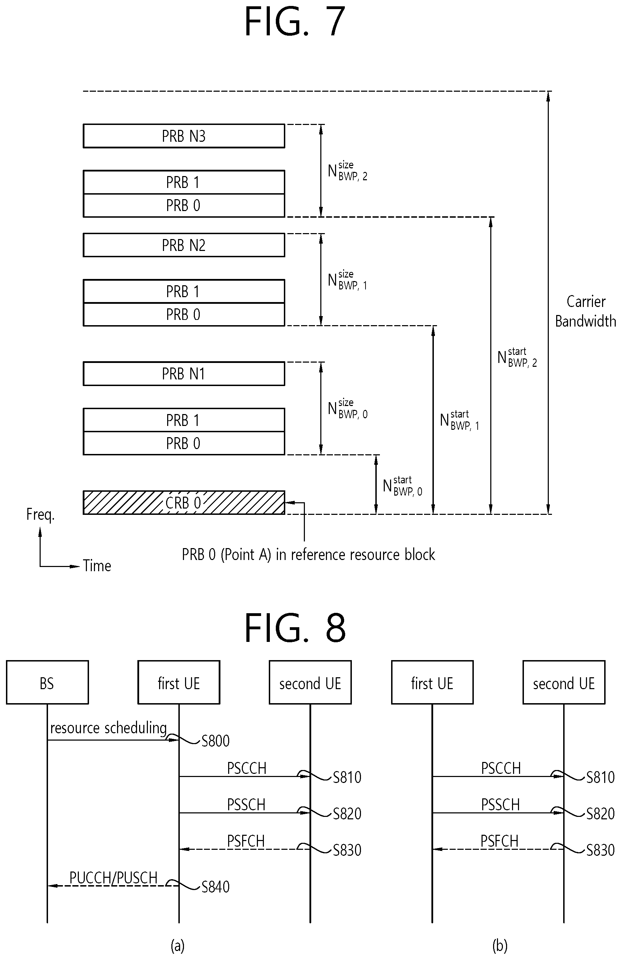

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Hereinafter, an example of SCI format 1-A will be described. For example, SCI may be replaced or substituted with inter-UE control information (or inter-device control information).

SCI format 1-A is used for the scheduling of PSSCH and 2nd-stage-SCI on PSSCH. For example, PSSCH may be replaced or substituted with an inter-UE physical shared channel (or an inter-device physical shared channel).

The following information is transmitted by means of the SCI format 1-A:
- Priority -3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 3
- Beta_offset indicator - 2 bits as provided by higher layer parameter sl-BetaOffsets2ndSCI
- Number of DMRS port - 1 bit as defined in Table 4
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise (For example, PSFCH may be replaced or substituted with an inter-UE physical feedback channel (or an inter-device physical feedback channel).)
- Reserved - a number of bits as determined by higher layer parameter sl-NumReservedBits, with value set to zero.

**[Table 3]**

| Value of 2^{nd}-stage SCI format field | 2^{nd}-stage SCI format |
|---|---|
| 00 | SCI format 2-A |
| 01 | SCI format 2-B |
| 10 | Reserved |
| 11 | Reserved |

**[Table 4]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version -2 bits
- Source ID -8 bits
- Destination ID - 16 bits
- HARQ feedback enabled/disabled indicator - 1 bit
- Cast type indicator - 2 bits as defined in Table 5
- CSI request - 1 bit

**[Table 5]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version -2 bits
- Source ID -8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in a step S830, a first UE may receive a PSFCH. For example, a first UE and a second UE may determine a PSFCH resource, and a second UE may transmit HARQ feedback to a first UE using a PSFCH resource.

Referring to (a) of FIG. 8, in a step S840, a first UE may transmit SL HARQ feedback to a base station through a PUCCH and/or a PUSCH.

Meanwhile, a modulation scheme in a delay-Doppler domain may be applied to inter-device communication.

For example, when modulation of an orthogonal frequency division multiplexing (OFDM; orthogonal frequency division multiplex) scheme is performed, due to complementarity between time and frequency, a localized waveform may not be generated in both domains. On the other hand, in a (quasi-periodic) delay-Doppler domain, a localized waveform may be generated in both dimensions.

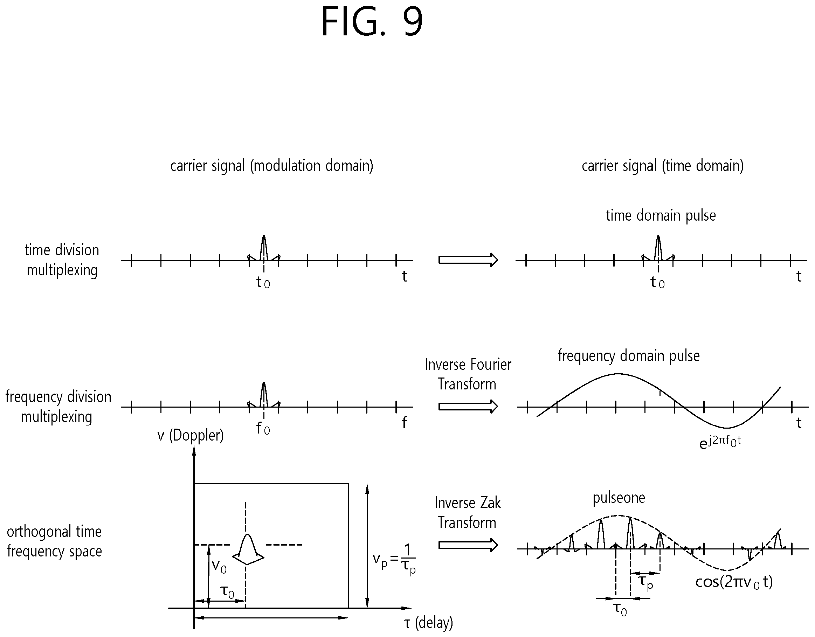

FIG. 9 shows a modulation scheme of an orthogonal time frequency space scheme in which a localized waveform may be generated in both dimensions, according to an embodiment of the present disclosure. The embodiment of FIG. 9 may be combined with various embodiments of the present disclosure.

Referring to FIG. 9, in a time division multiplexing scheme and a frequency division multiplexing scheme, a localized waveform may not be generated in both a time domain and a frequency domain, whereas, in an orthogonal time frequency space (OTFS; orthogonal time frequency space) scheme, which is one of modulation schemes performed in a delay-Doppler domain, a waveform including both a localized waveform in a delay domain and a localized waveform in a Doppler domain (e.g., pulseone) may be generated.

According to an embodiment of the present disclosure, as a delay-Doppler signal modulation scheme, an orthogonal time frequency space scheme may be used.

For example, the orthogonal time frequency space scheme may be a two-dimensional modulation scheme in a delay-Doppler domain. For example, an impulse waveform in the delay-Doppler domain may be transmitted as a pulseone in a time domain and a frequency domain. For example, when an inverse time (frequency) Zak transform is applied to a signal in the delay-Doppler domain, the signal may be converted into a signal in a time domain and a frequency domain. For example, when a time Zak transform and an inverse frequency Zak transform are applied to a time-domain signal, the signal becomes a frequency-domain signal, and thus the two Zak transforms may correspond to a Fourier transform.

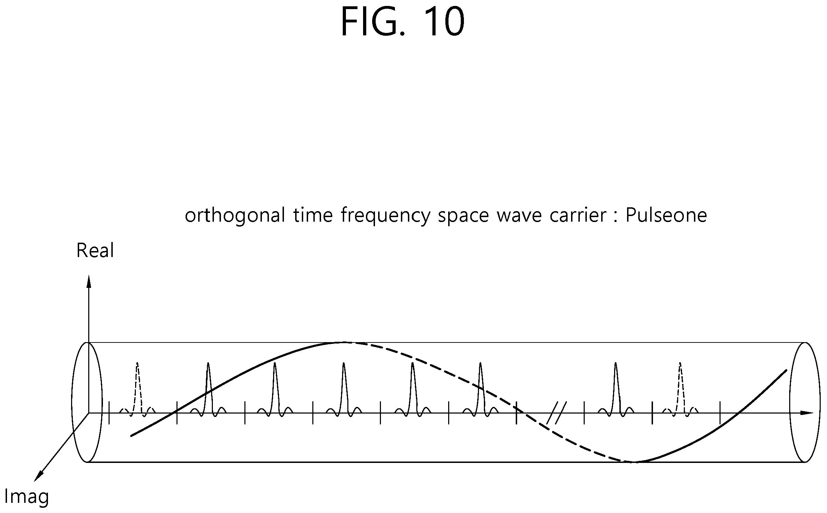

FIG. 10 shows a pulseone waveform in a time domain and a frequency domain, according to an embodiment of the present disclosure. The embodiment of FIG. 10 may be combined with various embodiments of the present disclosure.

Referring to FIG. 10, a pulseone waveform generated by applying an inverse time (frequency) Zak transform to an impulse waveform in a delay-Doppler domain is shown.

A doubly-spread wireless channel may be represented in a delay-Doppler domain. For example, each path of a wireless channel may be represented as a corresponding point of delay and Doppler. For example, in a case of a time division multiplexing signal, paths having different Doppler values for the same delay value of the channel may overlap. For example, in a case of a frequency division multiplexing signal, paths having different delays for the same Doppler value of the channel may overlap. For example, in a case of a delay-Doppler signal, paths of the channel may be distinguished in a two-dimensional domain of delay and Doppler. For example, a channel output of the delay-Doppler signal may be calculated as a twisted convolution between the delay-Doppler signal and a channel in the delay-Doppler domain.

For example, when Symplectic FFT (SFFT) is applied to a signal on an N * M (quasi-periodic) delay-Doppler domain, the signal may be converted into an M * N time-frequency domain signal. For example, by adding a pre-processing operation to an orthogonal frequency division multiplexing modulation scheme through the transformation, an orthogonal time frequency space modulation scheme may be implemented.

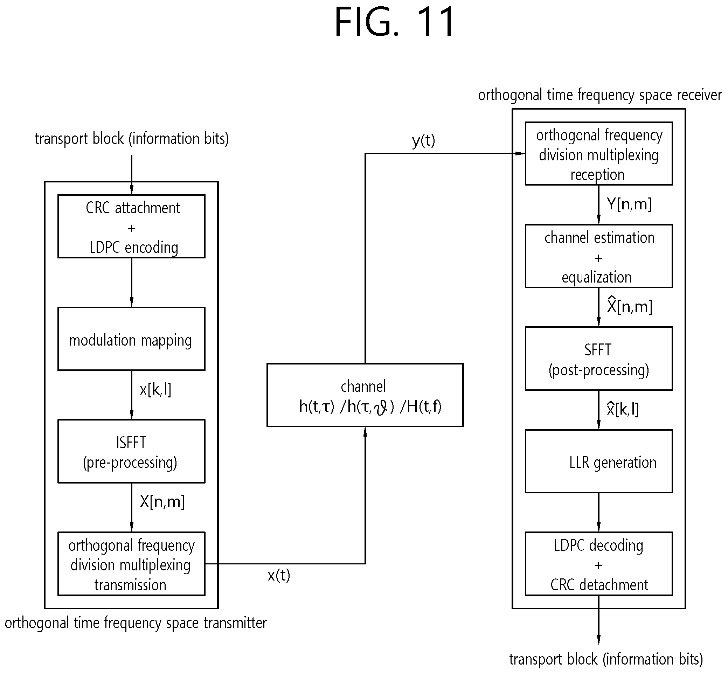

FIG. 11 shows a system for implementing a transformation between a delay-Doppler domain signal and a time-frequency domain signal, according to an embodiment of the present disclosure. The embodiment of FIG. 11 may be combined with various embodiments of the present disclosure.

Referring to FIG. 11, in an orthogonal time frequency space transmitter using a modulation scheme of an orthogonal time frequency space scheme, CRC attachment and LDPC encoding may be performed on a transport block including information bits. Thereafter, modulation mapping may be performed, and ISFFT may be performed as pre-processing. Thereafter, orthogonal frequency division multiplexing transmission may be performed, and the transmission may be performed through a channel.

Thereafter, an orthogonal time frequency space receiver using a demodulation scheme of an orthogonal time frequency space scheme may receive the orthogonal frequency division multiplexing transmission. Thereafter, channel estimation and equalization may be performed, and SFFT may be performed as post-processing. Thereafter, LLR may be generated, and a transport block including information bits may be obtained by performing LDPC decoding and CRC removal.

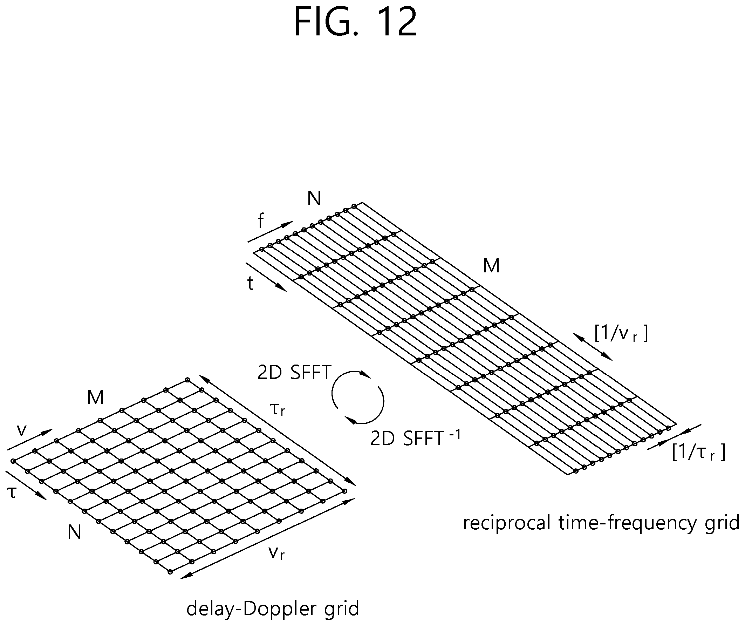

FIG. 12 shows a relationship between a delay-Doppler grid and a time-frequency grid, according to an embodiment of the present disclosure. The embodiment of FIG. 12 may be combined with various embodiments of the present disclosure.

Referring to FIG. 12, a delay-Doppler grid and a reciprocal time-frequency grid are shown. The two planes may have a relationship in which one may be obtained from the other by performing a 2D SFFT and an inverse 2D SFFT.

For example, in terms of communication performance, communication of an orthogonal time frequency space scheme may have superior performance compared to communication of an orthogonal frequency division multiplexing scheme over an mmWave channel. For example, in terms of radar performance, from a Doppler estimation perspective, communication of an orthogonal time frequency space scheme may have superior performance compared to communication of an orthogonal frequency division multiplexing scheme.

On the other hand, a modulation scheme of an orthogonal time frequency space scheme may have a limitation in that a pilot needs to be transmitted at a center of a 2D delay-Doppler domain and guard symbols are necessarily required. For example, due to the pilot structure, it may be (relatively) disadvantageous for multi-user transmission.

As technologies related to unmanned aerial vehicles (UAVs; unmanned aerial vehicles) and/or drones (hereinafter, referred to as UAVs) have rapidly developed, research on utilizing UAVs as communication nodes in a mobile communication system has been actively conducted in a mobile communication field. For example, a UAV may have a role of a relay node providing a communication service in the mobile communication system and/or a role of a UE node receiving a communication service in the mobile communication system.

Here, the UAV UE may have characteristics such as movement in a three-dimensional space and/or a flexible trajectory and/or a high speed, etc. and may have mobility distinguished from that of a conventional terrestrial UE. Accordingly, a base station and/or a cell in a mobile communication system may need to be evolved to support both a UE with low mobility and/or a UE with high mobility.

Meanwhile, for the purpose of supporting a high-speed moving object (e.g., UAV), schemes for modulating a signal in a domain other than a time-frequency domain have recently been actively studied. For example, an orthogonal time frequency space (e.g., OTFS; orthogonal time frequency space) modulation scheme is a scheme for transmitting a signal modulated in a delay-Doppler domain, and has an advantage in that reception performance may be improved even in a channel environment having large delay spread and/or Doppler spread because each modulation symbol is received after experiencing all components of a doubly dispersed channel.

However, a modulation scheme using a Doppler domain, such as an orthogonal time frequency space scheme, requires higher complexity compared to an orthogonal frequency division multiplexing (e.g., OFDM; orthogonal frequency division multiplexing) scheme, which is a conventional time-frequency modulation scheme, and has a disadvantage in that, due to a characteristic that a signal is spread in a time domain and a frequency domain, the modulation scheme has a structure disadvantageous for real-time signal processing. Accordingly, in the present disclosure, a method for efficiently applying a delay-Doppler (or frequency-Doppler) domain-based modulation scheme to support a high-speed moving object is proposed.

### [Proposal #01]

According to an embodiment of the present disclosure, in a mobile communication system including a first node and a second node, when a modulation scheme in a time-frequency domain (hereinafter, referred to as a first modulation scheme) and/or a modulation scheme in a delay-Doppler (or frequency-Doppler) domain (hereinafter, referred to as a second modulation scheme) is supported, a modulation scheme to be applied to signal transmission between nodes may be determined according to at least one of the following schemes.

For example (scheme 1), selection of a modulation scheme may not be allowed during an initial access. For example, according to the scheme, change of a modulation scheme may not be allowed during the initial access. For example, according to the scheme, a first modulation scheme may be used as a default modulation scheme. According to the scheme, after the initial access, change of a modulation scheme may be allowed. At this time, for example, whether the first modulation scheme is applied or the second modulation scheme is applied may be configured.

And/or, for example (scheme 2), in scheme 2, selection of a modulation scheme may be allowed during an initial access. For example, according to the scheme, change of a modulation scheme may be allowed during the initial access. For example, according to the scheme, a first modulation scheme or a second modulation scheme may be selected according to initial access resource selection. According to the scheme, after the initial access, change of a modulation scheme may be allowed. At this time, for example, whether the first modulation scheme is applied or the second modulation scheme is applied may be configured.

Here, for example, the first modulation scheme may be orthogonal frequency division multiplexing, and the second modulation scheme may be orthogonal time frequency space.

According to an embodiment of the present disclosure, in a mobile communication system including a first node and a second node, assuming that the second node supports a modulation scheme in a time-frequency domain (a first modulation scheme) and a modulation scheme in a delay-Doppler (or frequency-Doppler) domain (a second modulation scheme), the second node may be a UE having high mobility (e.g., UAV), and the first node may be another UAV or a base station.

Meanwhile, for example, a second modulation scheme may be a modulation scheme robust to a high-speed mobility environment compared to a first modulation scheme. Accordingly, in the system, the second modulation scheme may be a modulation scheme additionally supported in a high-speed mobility environment.

For example, after a first node and a second node are connected by applying a first modulation scheme as a default modulation scheme, when it is detected that a channel environment between the first node and the second node is a high-speed mobility environment, a second modulation scheme may be applied.

However, the method has a limitation in that, when an environment between a first node and a second node is a high-speed mobility environment from an initial access, a first modulation scheme, which is a default modulation scheme, may not guarantee reliability of data transmission.

Accordingly, for example, as a method different from the above, a method for selecting one of a first modulation scheme or a second modulation scheme during an initial access may be considered. For example, in this case, an initial access resource when the first modulation scheme is selected and an initial access resource when the second modulation scheme is selected may be distinguished from each other. Here, change of a modulation scheme after the initial access may be allowed according to configuration between nodes.

The [Proposal #01] may be applied in combination with other proposal(s) within a range in which operations of the disclosure do not conflict.

### [Proposal #02]

According to an embodiment of the present disclosure, in a mobile communication system including a first node and a second node, when the first node (pre-)configures and/or indicates, to the second node, a resource region (hereinafter, referred to as a second resource region) to which a modulation scheme in a delay-Doppler domain (hereinafter, referred to as a second modulation scheme) is applied, the number of time-domain symbols and/or the number of frequency-domain subcarriers constituting the resource region may be limited to specific number(s).

For example, the specific number(s) may be multiples of 2, 3, and 5. Here, for example, the modulation scheme in the delay-Doppler domain may be orthogonal time frequency space. Here, for example, the time-domain symbols and the frequency-domain subcarriers may refer to symbols and subcarriers based on a modulation scheme in a time-frequency domain.

According to an embodiment of the present disclosure, in a mobile communication system including a first node and a second node, it is assumed that a second node supports a modulation scheme in a time-frequency domain (a first modulation scheme) and a modulation scheme in a delay-Doppler (or frequency-Doppler) domain (a second modulation scheme). For example, the first modulation scheme may be orthogonal frequency division multiplexing, and the second modulation scheme may be orthogonal time frequency space.

Here, for example, the orthogonal time frequency space may be implemented in a form in which precoding is applied to an orthogonal frequency division multiplexing system. For example, the orthogonal time frequency space may be implemented in a form in which an Inverse Symplectic Fast Fourier Transform (ISFFT) is applied to a front end of an orthogonal frequency division multiplexing transmitter and an Symplectic Fast Fourier Transform (SFFT) is applied to a rear end of an orthogonal frequency division multiplexing receiver.

Here, the ISFFT and/or the SFFT may refer to a two-dimensional Fourier (inverse) transform for a time-frequency domain. Here, a size of a time and frequency resource region to which the ISFFT and/or the SFFT is applied may be required to satisfy a condition of multiples of 2, multiples of 3, or multiples of 5 according to an FFT implementation constraint. For example, a time-frequency domain to which orthogonal time frequency space is to be applied may be constrained such that the number of time-domain symbols is a multiple of 2, a multiple of 3, or a multiple of 5, and the number of frequency-domain subcarriers is a multiple of 2, a multiple of 3, or a multiple of 5.

Here, a node that intends to support a second modulation scheme such as orthogonal time frequency space may not expect a second modulation scheme configuration that does not satisfy the constraint. Here, the time-domain symbols and the frequency-domain subcarriers may refer to symbols and subcarriers based on a modulation scheme in a time-frequency domain.

The [Proposal #02] may be applied in combination with other proposal(s) within a range in which operations of the disclosure do not conflict.

### [Proposal #03]

According to an embodiment of the present disclosure, in a mobile communication system including a first node and a second node, when a first node transmits a data signal to a second node, a method may be provided in which a modulation scheme in a time-frequency domain (hereinafter, referred to as a first modulation scheme) is applied to a control signal related to data and a modulation scheme in a delay-Doppler (or frequency-Doppler) domain (hereinafter, referred to as a second modulation scheme) is applied to the data signal for transmission.

Here, for example, the first modulation scheme may be orthogonal frequency division multiplexing, and the second modulation scheme may be orthogonal time frequency space.

Here, for example, a modulation scheme applied to data transmission may be indicated through the control signal related to data. For example, through transmission of the control signal, the first modulation scheme or the second modulation scheme may be indicated (as a modulation scheme applied to data transmission).

According to an embodiment of the present disclosure, in a mobile communication system including a first node and a second node, it is assumed that a second node supports a modulation scheme in a time-frequency domain (a first modulation scheme) and a modulation scheme in a delay-Doppler (or frequency-Doppler) domain (a second modulation scheme).

Here, for example, the second modulation scheme may include a modulation scheme in a Doppler domain. The modulation scheme in the Doppler domain may have an advantage in that reception performance is ensured in a high-speed mobility environment, but may have a disadvantage in that delay occurs in a signal processing process because decoding needs to be performed in units of blocks in a time domain. Accordingly, when a control signal related to a data signal is transmitted together with the data signal, the second modulation scheme may be relatively disadvantageous compared to the first modulation scheme.

For example, when a control signal related to a data signal is transmitted, by applying a first modulation scheme to the control signal and transmitting the control signal earlier than the data signal in a time domain, control information required for data demodulation may be decoded first, and as a result, data demodulation may be accelerated.

On the other hand, since the second modulation scheme is a modulation scheme in a delay-Doppler (or frequency-Doppler) domain, if a control signal is transmitted by applying the second modulation scheme, it may be difficult to place the control signal earlier in a time domain. Accordingly, it may be difficult to secure control information in advance prior to data demodulation. Therefore, in the present disclosure, when a first node transmits a data signal to a second node, a method is proposed in which a modulation scheme in a time-frequency domain (a first modulation scheme) is applied to transmission of a control signal related to data, and a first modulation scheme or a modulation scheme in a delay-Doppler (or frequency-Doppler) domain (a second modulation scheme) is applied to transmission of the data signal.

Here, for example, a control signal may be placed prior to a data signal in a time domain. Here, according to the proposal of the present disclosure, by combining advantages of a first modulation scheme and a second modulation scheme, the control signal may be quickly secured even in a high-speed mobility environment, and the data signal may also be stably received.

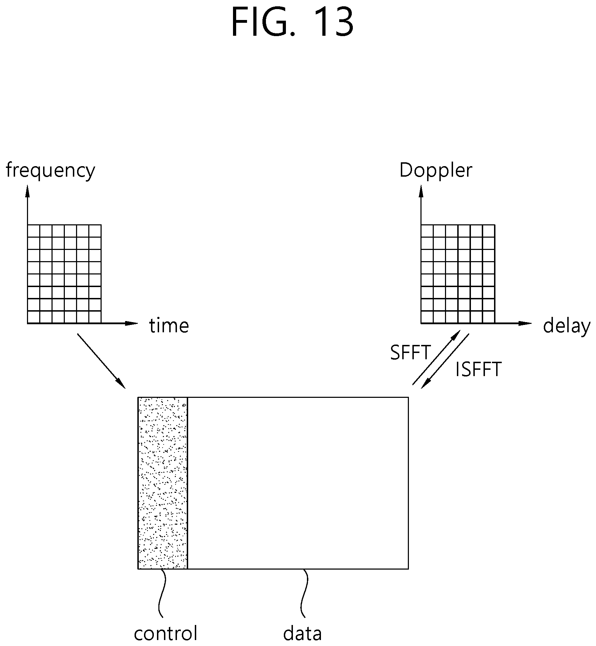

FIG. 13 shows control signal transmission and data transmission performed by applying different modulation schemes, according to an embodiment of the present disclosure. The embodiment of FIG. 13 may be combined with various embodiments of the present disclosure.

Referring to FIG. 13, control signal transmission may be performed prior to data transmission in a time domain. Here, a modulation scheme performed in a time-frequency plane (e.g., orthogonal frequency division multiplexing) may be applied to the control signal transmission, and a modulation scheme performed in a delay-Doppler plane (e.g., orthogonal time frequency space) may be applied to the data transmission.

Here, for example, a control signal block and a data signal block shown in FIG. 13 may represent shapes on a time-frequency plane. Here, when SFFT is performed on the data transmission block, a shape of a data signal block on a delay-Doppler plane may be obtained, and conversely, when ISFFT is performed on the data signal block on the delay-Doppler plane, a shape of the data signal block shown in FIG. 13 may be obtained.

For example, in the embodiment, even if a modulation scheme in a delay-Doppler (or frequency-Doppler) domain is not applied to a control signal, reception performance comparable to that of a data signal may be achieved by transmitting relatively small information using a robust coding scheme.

The [Proposal #03] may be applied in combination with other proposal(s) within a range in which operations of the disclosure do not conflict.

### [Proposal #04]

According to an embodiment of the present disclosure, in a mobile communication system including a first node and a second node, when a first node transmits a data signal to a second node, at least one of the following elements related to a feedback signal may be differently applied according to a modulation scheme applied to the data signal.
(1) (candidate) transmission resource of a feedback signal
(2) (candidate) transmission form of a feedback signal
(3) (candidate) modulation scheme of a feedback signal
(4) (candidate) transmission timing of a feedback signal

Here, an element related to the feedback signal may be finally determined by (pre-)configuration and/or an (associated) control signal and/or a modulation scheme.

According to an embodiment of the present disclosure, in a mobile communication system including a first node and a second node, it is assumed that a second node supports a modulation scheme in a time-frequency domain (a first modulation scheme) and a modulation scheme in a delay-Doppler (or frequency-Doppler) domain (a second modulation scheme).

Here, the second modulation scheme may require higher complexity compared to the first modulation scheme, and longer decoding time may be required. Accordingly, according to a modulation scheme applied to a data signal, transmission timing of a feedback resource used for inter-UE feedback (e.g., HARQ-ACK feedback), etc., may be differently applied.

For example, (candidate) transmission timing of a feedback signal between nodes may be (pre-)configured, and (candidate) transmission timing of a feedback signal suitable according to a modulation scheme applied to data may be applied.

Alternatively, for example, according to a modulation scheme to be applied, (candidate) transmission resource and/or (candidate) transmission form of a feedback signal may be differently applied. For example, when a second modulation scheme is applied, (candidate) transmission resource and/or (candidate) transmission form of a feedback signal suitable for a high-speed mobility environment may be selected and applied.

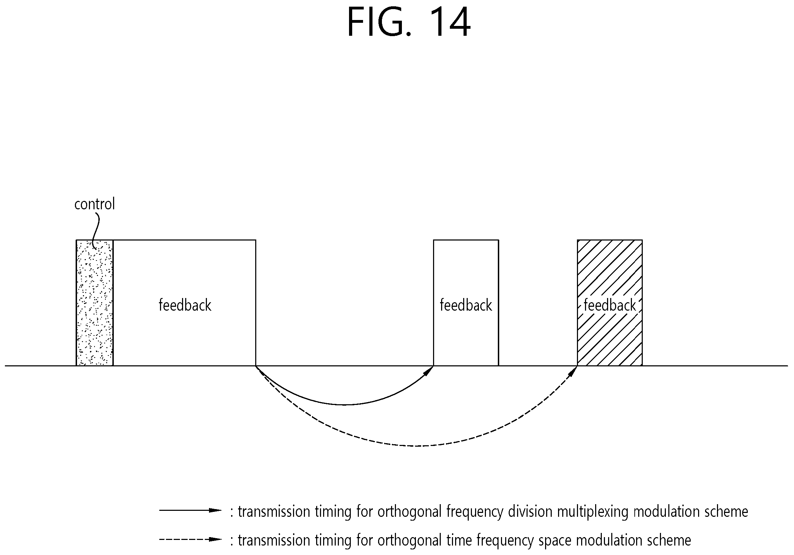

FIG. 14 shows a feedback resource for which whether to be used for a feedback operation is determined according to a modulation scheme applied to data transmission, according to an embodiment of the present disclosure. The embodiment of FIG. 14 may be combined with various embodiments of the present disclosure.

Referring to FIG. 14, two feedback resources are shown. For example, an orthogonal frequency division multiplexing modulation scheme or an orthogonal time frequency space modulation scheme may be applied to data transmission. For example, a first feedback resource may be used for a feedback operation related to the data transmission when the orthogonal frequency division multiplexing modulation scheme is applied to the data transmission. For example, a second feedback resource may be used for a feedback operation related to the data transmission when the orthogonal time frequency space modulation scheme is applied to the data transmission.

The [Proposal #04] may be applied in combination with other proposal(s) within a range in which operations of the disclosure do not conflict.

### [Proposal #05]

According to an embodiment of the present disclosure, in a mobile communication system including a first node and a second node, when a first node transmits a data signal to a second node, a method may be provided in which a modulation scheme in a time-frequency domain (hereinafter, referred to as a first modulation scheme) is applied to a reference signal related to data and a modulation scheme in a delay-Doppler (or frequency-Doppler) domain (hereinafter, referred to as a second modulation scheme) is applied to the data signal.

According to an embodiment of the present disclosure, in a mobile communication system including a first node and a second node, it is assumed that a second node supports a modulation scheme in a time-frequency domain (a first modulation scheme) and a modulation scheme in a delay-Doppler (or frequency-Doppler) domain (a second modulation scheme).

Here, when a modulation scheme in a time-frequency domain is applied, a channel and a transmitted signal may be received in a form in which the channel and the transmitted signal are multiplied, whereas, when a modulation scheme in a delay-Doppler (or frequency-Doppler) domain is applied, the channel and the transmitted signal may be received in a form in which the channel and the transmitted signal are 2D convolution. Accordingly, for channel estimation in the delay-Doppler (or frequency-Doppler) domain, guard symbols may need to be arranged around a reference signal by an amount corresponding to a size of delay spread and/or Doppler spread of the channel. Accordingly, the modulation scheme in the delay-Doppler (or frequency-Doppler) domain may have a disadvantage in that overhead of a reference signal required for channel estimation is high.

Accordingly, in the present disclosure, a transmission method is proposed in which a modulation scheme in a time-frequency domain (hereinafter, referred to as a first modulation scheme) is applied to a reference signal related to data and a modulation scheme in a delay-Doppler (or frequency-Doppler) domain (hereinafter, referred to as a second modulation scheme) is applied to a data signal. Here, for example, a reference signal to which the modulation scheme in the time-frequency domain is applied may be transmitted in a resource region distinguished from a time-frequency domain in which the data signal is transmitted, or may be transmitted together within the time-frequency domain in which the data signal is transmitted.

The [Proposal #05] may be applied in combination with other proposal(s) within a range in which operations of the disclosure do not conflict.

### [Proposal #06]

According to an embodiment of the present disclosure, in a mobile communication system including a first node and a second node, a method is proposed in which, when data and/or a reference signal is transmitted by applying a modulation scheme in a delay-Doppler domain, data transmitted using different resources share the same reference signal.

Here, for example, a transmitting node may transmit, to a receiving node, information for whether a reference signal is shared and/or resource information related to sharing.

Here, for example, the reference signal may be transmitted using a time resource and/or a frequency resource different from a resource region in which data is transmitted. For example, data transmitted using different time resources may share the same reference signal. For example, data transmitted using different frequency resources may share the same reference signal.

According to an embodiment of the present disclosure, in a mobile communication system including a first node and a second node, it is assumed that a second node supports a modulation scheme in a delay-Doppler domain. For example, the modulation scheme in the delay-Doppler domain may be orthogonal time frequency space. Here, when a modulation scheme in a delay-Doppler domain, such as orthogonal time frequency space, is applied, there is a characteristic in that each transmission symbol in the domain experiences (passes through) the same channel.

For example, when a delay-Doppler resource region is given as a resource grid of size M * N, any transmission symbol on the resource grid may experience (pass through) the same channel. Here, when a modulation scheme in a delay-Doppler domain is applied, when a single node intends to transmit data to a plurality of nodes using different resources in the delay-Doppler domain, since channels experienced (passed through) by the data transmissions are the same regardless of a resource region, the plurality of data may share a reference signal.

On the other hand, when a conventional modulation scheme in a time-frequency domain is applied, when a single node intends to transmit data to a plurality of nodes using different resources, since channels experienced by the data transmissions are different according to a resource region, the plurality of data may not be able to share the same reference signal.

According to the proposal of the present disclosure, when a node transmits data to a plurality of nodes using different resources, a reference signal resource is transmitted such that the reference signal is shared, and thus there may be an advantage in that the reference signal is efficiently managed. Here, a transmitting node may transmit, to a receiving node, information for whether a reference signal is shared and/or resource information of a shared reference signal.

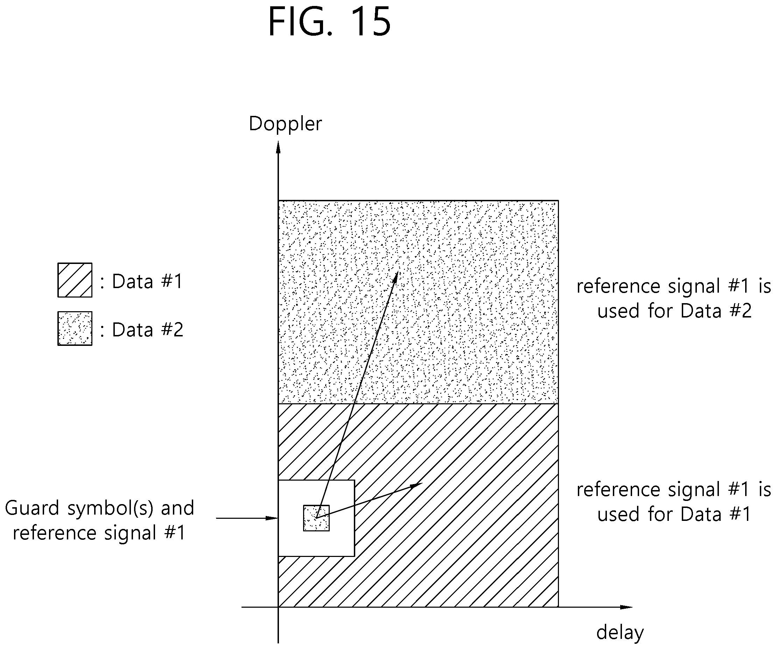

FIG. 15 shows the same reference signal used for different data transmissions, according to an embodiment of the present disclosure. The embodiment of FIG. 15 may be combined with various embodiments of the present disclosure.

Referring to FIG. 15, two data transmissions performed using different resources in a delay-Doppler plane are shown. For example, here, transmission of a reference signal #1 may be performed together with data transmission of data #1.

For example, a modulation scheme in a delay-Doppler domain (e.g., orthogonal time frequency space) may be applied to the two data transmissions (e.g., transmissions of data #1 and data #2). That is, channels experienced by the two data transmissions in a transmission process may be the same. Accordingly, since data transmission of data #2 may experience the same channel used for transmission of the reference signal #1, a node receiving the data #2 may receive the reference signal #1.

For example, the reference signal #1 may be used for an operation related to data transmission of data #2. For example, the reference signal #1 may be used for an operation related to data transmission of data #1.

The [Proposal #06] may be applied in combination with other proposal(s) within a range in which operations of the disclosure do not conflict.

### [Proposal #07]

According to an embodiment of the present disclosure, in a mobile communication system comprising a first node and a second node, when data and/or a reference signal is transmitted by applying a modulation scheme in a delay-Doppler domain, a method is proposed in which resource allocation for data and resource allocation for the reference signal are independently performed.

Here, for example, the control signal (or control information) related to the data may include independent fields for data resource allocation and reference signal resource allocation, respectively.

Here, for example, a resource region for reference signal transmission and a resource region for data transmission may be separately configured. For example, (candidate) resource(s) for reference signal transmission and (candidate) resource(s) for data signal transmission may be (pre-)configured to be distinguished from each other, and a reference signal resource and a data resource may be independently selected and/or indicated through a control signal.

Here, when a data transmission resource region (partially) includes a reference signal transmission resource region, information for an actually allocated reference signal transmission resource in the data transmission resource region may be transmitted through a control signal. Here, a reference signal transmission resource not actually allocated may be used for data transmission.

According to an embodiment of the present disclosure, in a mobile communication system comprising a first node and a second node, it is assumed that a second node supports a modulation scheme in a delay-Doppler domain. For example, the modulation scheme in the delay-Doppler domain may be orthogonal time frequency space. Here, when a modulation scheme in a delay-Doppler domain, such as orthogonal time frequency space, is applied, there may be a characteristic in that each transmission symbol in the domain experiences (passes through) the same channel.

For example, when a delay-Doppler resource region is given as a resource grid of size M * N, any transmission symbol on the resource grid may experience (pass through) the same channel. Accordingly, even when data and a reference signal are transmitted using different resources within the delay-Doppler resource region, a channel experienced by data transmission may be estimated through the reference signal. Accordingly, a resource region in which the reference signal is transmitted may not be limited to a data transmission resource.

For example, when a modulation scheme in a delay-Doppler domain is applied, when a single node intends to transmit respective data to a plurality of nodes by using different resources in the delay-Doppler domain, since channels experienced by transmissions are the same regardless of a resource region, the plurality of data may share the same reference signal.

Here, a reference signal may not be limited to a specific data transmission, and a method for allocating a transmission resource of the reference signal independently from a data transmission resource may be considered. For example, a transmitting node may independently indicate resource allocation for a reference signal and resource allocation for data through a control signal (or control information) related to data.

For example, candidate resource(s) for reference signal transmission and candidate resource(s) for data signal transmission may be (pre-)configured to be distinguished from each other, and a reference signal resource and a data resource may be independently selected and/or indicated through a control signal. Here, when a data transmission resource region (partially) includes a reference signal transmission resource region, a reference signal transmission resource not actually allocated may be used for data transmission.

The [Proposal #07] may be applied in combination with other proposal(s) within a range in which operations of the disclosure do not conflict.

### [Proposal #08]

According to an embodiment of the present disclosure, in a mobile communication system comprising a first node and a second node, a method may be provided in which a first node (pre-)configures and/or indicates, to a second node, a resource region to which a modulation scheme in a time-frequency domain (hereinafter, referred to as a first modulation scheme) is applied (hereinafter, referred to as a first resource region) and a resource region to which a modulation scheme in a delay-Doppler (or frequency-Doppler) domain (hereinafter, referred to as a second modulation scheme) is applied (hereinafter, referred to as a second resource region), and informs correlation information between a channel of the first resource region and a channel of the second resource region.

Here, for example, the first modulation scheme may be orthogonal frequency division multiplexing, and the second modulation scheme may be orthogonal time frequency space.

Here, for example, a second node may use channel information measured in a second resource region for data demodulation in a first resource region. Alternatively, for example, the second node may use channel information measured in the first resource region for data demodulation in the second resource region.

Here, for example, the correlation information between channels may mean that channel information measured in a specific resource region may be used to estimate channel information in another resource region.

According to an embodiment of the present disclosure, in a mobile communication system comprising a first node and a second node, it is assumed that a second node supports a modulation scheme in a time-frequency domain (a first modulation scheme) and a modulation scheme in a delay-Doppler (or frequency-Doppler) domain (a second modulation scheme). Here, channel information measured in the modulation scheme in the delay-Doppler (or frequency-Doppler) domain may include delay and/or Doppler information per path of a physical channel, and the information may also be used when estimating a channel in a time-frequency domain.

For example, when a first node (pre-)configures and/or indicates, to a second node, a resource region to which a modulation scheme in a time-frequency domain (hereinafter, referred to as a first modulation scheme) is applied (hereinafter, referred to as a first resource region) and a resource region to which a modulation scheme in a delay-Doppler (or frequency-Doppler) domain (hereinafter, referred to as a second modulation scheme) is applied (hereinafter, referred to as a second resource region), and provides correlation information between a channel of the first resource region and a channel of the second resource region, the second node may estimate channel information of the second resource region (or the first resource region) using channel information of the first resource region (or the second resource region).

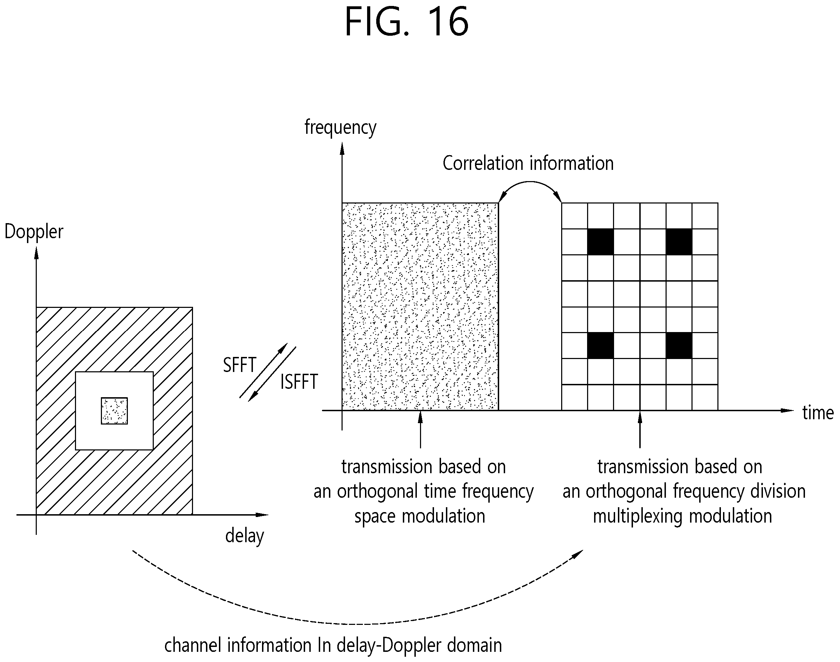

FIG. 16 shows correlation information between channel information measured in transmission based on a resource region to which a modulation scheme in a delay-Doppler domain is applied and channel information related to a time-frequency domain, according to an embodiment of the present disclosure. The embodiment of FIG. 16 may be combined with various embodiments of the present disclosure.

Referring to FIG. 16, a first node (a transmitting node) may receive a transmission to which a modulation scheme in a delay-Doppler domain is applied in a delay-Doppler resource region and may obtain channel information related to the delay-Doppler resource region. For example, the first node may generate correlation information between the delay-Doppler resource region (e.g., a second resource region) and a time-frequency resource region (e.g., a first resource region) related thereto. The first node may transmit the correlation information to a second node, and the second node may estimate channel information of the time-frequency resource region based on the correlation information.

For example, a channel in a first resource region may be estimated based on delay and/or Doppler information per path of a channel measured in a second resource region, assuming variation within a certain margin. According to the proposal of the present disclosure, when estimating a channel in a time-frequency domain, there is an advantage in that more accurate channel estimation may be performed by utilizing channel information obtained in a delay-Doppler domain. For example, the correlation information between channels may be transmitted in a form of QCL (Quasi-Colocation).

The [Proposal #08] may be applied in combination with other proposal(s) within a range in which operations of the disclosure do not conflict.

### [Proposal #09]

According to an embodiment of the present disclosure, in a mobile communication system comprising a first node and a second node, a method may be provided in which a first node (pre-)configures, to a second node, a resource region to which a modulation scheme in a delay-Doppler (or frequency-Doppler) domain (hereinafter, referred to as a second modulation scheme) is applied (hereinafter, referred to as a second resource region), and the second node performs a data transmission and reception operation based on the second resource region in at least one of the following cases.
1. when a (pre-)agreed and/or configured event between a first node and a second node occurs
2. when a first node indicates use of the second resource region

Here, for example, a (pre-)agreed and/or configured event between the first node and the second node may include a handover-related event.

Here, for example, the first node may indicate use of the second resource region through higher layer signaling and/or a dynamic control signal. For example, RRC signaling and/or a MAC control element (e.g., CE; Control Element) and/or base station-to-UE control information (e.g., DCI) and/or inter-UE control information (e.g., SCI) may be used for indication of information for use of the second resource region.

Here, the second resource region may be used in a semi-persistent scheduling (SPS) form. For example, when the first node activates the second resource region, the second resource region may exist (be defined) periodically until the first node deactivates the second resource region.

According to an embodiment of the present disclosure, in a mobile communication system comprising a first node and a second node, it is assumed that a second node supports a modulation scheme in a time-frequency domain (a first modulation scheme) and a modulation scheme in a delay-Doppler (or frequency-Doppler) domain (a second modulation scheme). Here, the second modulation scheme may be a modulation scheme robust to variation in a time domain and/or a frequency domain of a channel.

For example, when orthogonal time frequency space is applied as one of the second modulation schemes, a transmission signal according to the orthogonal time frequency space modulation scheme may be received through all paths of a channel in a delay-Doppler domain and, unlike transmission in a time-frequency domain, may not experience channel fading.

Here, when the second modulation scheme is applied, since data is transmitted by utilizing all paths of a channel, reliability of transmission may be high. Accordingly, the second modulation scheme may be a modulation scheme relatively more suitable for maintaining a link without interruption.

For example, in a mobile communication system comprising a base station and a UE, when a base station performs handover of the UE to another base station, the base station may improve reliability of the handover by performing data transmission and reception to which the second modulation scheme is applied with the UE.

Accordingly, in the present disclosure, a method is proposed in which a first node (pre-)configures, to a second node, a resource region to which a modulation scheme in a delay-Doppler (or frequency-Doppler) domain (hereinafter, referred to as a second modulation scheme) is applied (hereinafter, referred to as a second resource region), and when a (pre-)agreed and/or configured event between the first node and the second node occurs or when the first node indicates use of the second resource region, performs (or supports) a data transmission and reception operation through the second resource region.

According to the proposal of the present disclosure, when stable link connectivity between nodes is required, there may be an advantage in that stable data transmission and reception through a delay-Doppler (or frequency-Doppler) modulation scheme may be performed according to a mutually agreed event and/or an indication.

The [Proposal #09] may be applied in combination with other proposal(s) within a range in which operations of the disclosure do not conflict.

The proposed method may be applied to a device described below. First, a processor 202 of a receiving UE may configure at least one partial bandwidth (e.g., BWP). The processor 202 of the receiving UE may control a transceiver 206 of the receiving UE to receive, from a transmitting UE, a physical channel related to inter-UE communication (e.g., SL communication) and/or a reference signal related to inter-UE communication (e.g., SL communication) on the at least one partial bandwidth (e.g., BWP).

An unmanned aerial vehicle (e.g., UAV; unmanned aerial vehicle) and/or a drone may have differences from a conventional UE in terms of LOS, speed, and altitude since the unmanned aerial vehicle moves in air compared to a conventional vehicle and/or a conventional UE. Among these, as a modulation method that may provide a gain to inter-UE communication (e.g., SL communication) in a case of a high speed, an orthogonal time frequency space (e.g., OTFS; orthogonal time frequency space) modulation scheme may be used. An orthogonal time frequency space (e.g., OTFS) modulation scheme may have an effect of improving a gain when a speed of a subject performing communication is high or a channel condition is poor, but may have a characteristic unsuitable for application to a MIMO environment, and thus there may be a need to provide a method for adaptively using a modulation scheme for communication between an orthogonal frequency division multiplexing (e.g., OFDM; orthogonal frequency division multiplexing) scheme and the orthogonal time frequency space modulation scheme.

For example, as technologies related to an unmanned aerial vehicle (e.g., UAV) and/or a drone (drone) have rapidly developed, research on utilizing an unmanned aerial vehicle (e.g., UAV) as a communication node in a mobile communication system has been actively conducted in a mobile communication field. For example, an unmanned aerial vehicle (e.g., UAV) may perform a role of a relay node providing a communication service in the mobile communication system and/or a role of a UE node receiving a communication service in the mobile communication system.

Here, the unmanned aerial vehicle (e.g., UAV) UE may have characteristics such as movement in a three-dimensional space and/or a flexible trajectory and/or a high speed, etc. and may have mobility clearly distinguished from that of a conventional terrestrial UE. Accordingly, for a purpose of supporting a high-speed moving object (e.g., UAV), schemes for modulating a signal in a domain other than a time-frequency domain have recently been actively studied.

For example, an orthogonal time frequency space (e.g., OTFS) modulation scheme is a scheme for transmitting a signal modulated in a delay-Doppler domain, and has an advantage in that reception performance may be improved even in a channel environment having large delay spread and/or Doppler spread because each modulation symbol is received after experiencing all components of a doubly dispersed channel. However, a modulation scheme using a Doppler domain, such as an orthogonal time frequency space (e.g., OTFS) scheme, requires higher complexity compared to an orthogonal frequency division multiplexing (e.g., OFDM) scheme, which is a conventional time-frequency modulation scheme, and may have a disadvantage in that, due to a characteristic that a signal is spread in a time axis and a frequency axis, the modulation scheme has a structure disadvantageous for real-time signal processing.

According to an embodiment of the present disclosure, advantages of two modulation schemes may be combined by applying a time-frequency domain-based modulation scheme to control channel transmission for performing inter-device transmission and applying a delay-Doppler domain-based modulation scheme to inter-device transmission (data transmission).

According to an embodiment of the present disclosure, a method for efficiently applying a delay-Doppler (or frequency-Doppler) domain-based modulation scheme to support a high-speed moving object in a next-generation communication system is proposed. For example, a method is proposed where a base station (or a network node) supports a modulation scheme in a time-frequency domain (hereinafter, referred to as a first modulation scheme) and a modulation scheme in a delay-Doppler (or frequency-Doppler) domain (hereinafter, referred to as a second modulation scheme), and the first modulation scheme and/or the second modulation scheme to a resource for an initial access procedure and/or a data transmission resource in a connected state is adaptively applied.

For example, in data transmission, in a signal group including a control signal, a reference signal, and a data signal, a method for maximizing efficiency of each modulation scheme is proposed by applying a first modulation scheme to a specific signal relatively sensitive to a time delay (for example, a control signal and/or a reference signal) and applying a second modulation scheme to remaining signals (for example, a data signal).

For example, based on that a channel estimated in a second modulation scheme represents a doubly selective channel, a method for utilizing channel information in the second modulation scheme for channel estimation and/or modulation and demodulation in a first modulation scheme is proposed.

According to an embodiment of the present disclosure, by combining advantages of a first modulation scheme (a modulation scheme in a time-frequency domain) and a second modulation scheme (a modulation scheme in a delay-Doppler domain), a control signal may be quickly obtained while a data signal may be stably received even in a high-speed mobility environment.

According to various embodiments of the present disclosure, an advantage of a time-frequency domain-based modulation scheme suitable for MIMO and fast communication and an advantage of a delay-Doppler domain-based modulation scheme robust to a channel condition may be appropriately achieved depending on a situation.

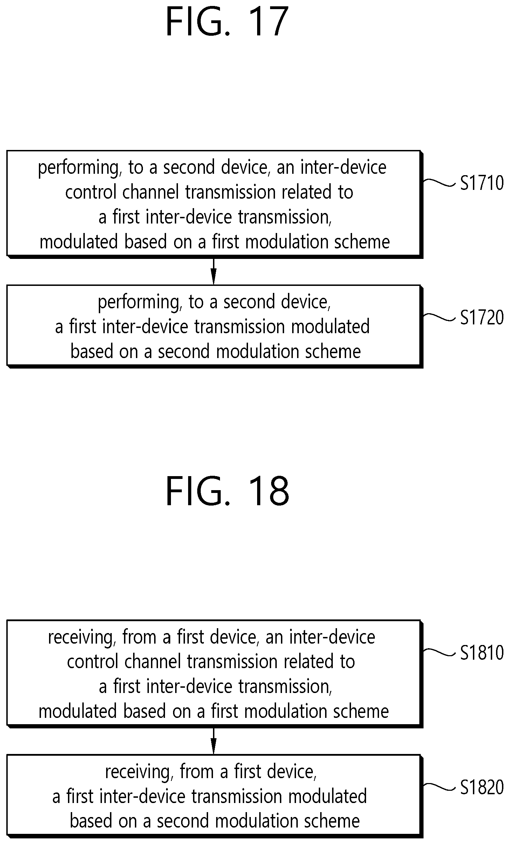

FIG. 17 shows a procedure of operations that may be performed by a first device according to an embodiment of the present disclosure. The embodiment of FIG. 17 may be combined with various embodiments of the present disclosure.

Referring to FIG. 17, in step S1710, a first device may perform, to a second device, an inter-device control channel transmission related to a first inter-device transmission, modulated based on a first modulation scheme. For example, the first modulation scheme may be a modulation scheme based on a time-frequency domain. In step S1720, the first device may perform, to the second device, the first inter-device transmission modulated based on a second modulation scheme. For example, the second modulation scheme may be a modulation scheme based on a delay-Doppler domain.

For example, the first modulation scheme may be an orthogonal frequency division multiplexing modulation scheme.

For example, the second modulation scheme may be an orthogonal time frequency space modulation scheme.

For example, the second modulation scheme may be an orthogonal chirp division multiplexing modulation scheme.

For example, additionally, the first device may perform a reference signal transmission related to the first inter-device transmission, modulated based on the second modulation scheme.

For example, a reference signal transmitted through the reference signal transmission may be shared between a second inter-device transmission different from the first inter-device transmission and the first inter-device transmission.

For example, a second resource used for the reference signal transmission may be allocated separately from a first resource used for the first inter-device transmission.

For example, information for a modulation scheme related to the inter-device transmission may be transmitted through the inter-device control channel transmission.

For example, information related to a resource region related to the inter-device transmission may be transmitted through the inter-device control channel transmission, and a number of symbols constituting the resource region may be a multiple of 2, a multiple of 3, or a multiple of 5.

For example, information related to a resource region related to the inter-device transmission may be transmitted through the inter-device control channel transmission, and a number of subcarriers constituting the resource region may be a multiple of 2, a multiple of 3, or a multiple of 5.

For example, additionally, the first device may receive an inter-device feedback transmission for the inter-device transmission by using an inter-device feedback resource. For example, a candidate resource group of the inter-device feedback resource may be selected based on the inter-device transmission being modulated based on the second modulation scheme.

For example, additionally, the first device may transmit, to the second device, information for a first resource region to which the first modulation scheme is applied and information for a second resource region to which the second modulation scheme is applied; and transmit, to the second device, correlation information related to the first resource region and the second resource region.

The embodiment described above may be applied to various devices described below. First, a processor 102 of a first device 100 may control a transceiver 106 to perform, to a second device 200, an inter-device control channel transmission related to a first inter-device transmission, modulated based on a first modulation scheme. For example, the first modulation scheme may be a modulation scheme based on a time-frequency domain. And, the processor 102 of the first device 100 may control the transceiver 106 to perform, to the second device 200, the first inter-device transmission modulated based on a second modulation scheme. For example, the second modulation scheme may be a modulation scheme based on a delay-Doppler domain.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

For example, the first modulation scheme may be an orthogonal frequency division multiplexing modulation scheme.

For example, the second modulation scheme may be an orthogonal time frequency space modulation scheme.

For example, the second modulation scheme may be an orthogonal chirp division multiplexing modulation scheme.

For example, additionally, the instructions may cause the first device to perform a reference signal transmission related to the first inter-device transmission, modulated based on the second modulation scheme.

For example, a reference signal transmitted through the reference signal transmission may be shared between a second inter-device transmission different from the first inter-device transmission and the first inter-device transmission.

For example, a second resource used for the reference signal transmission may be allocated separately from a first resource used for the first inter-device transmission.

For example, information for a modulation scheme related to the inter-device transmission may be transmitted through the inter-device control channel transmission.

For example, information related to a resource region related to the inter-device transmission may be transmitted through the inter-device control channel transmission, and a number of symbols constituting the resource region may be a multiple of 2, a multiple of 3, or a multiple of 5.

For example, information related to a resource region related to the inter-device transmission may be transmitted through the inter-device control channel transmission, and a number of subcarriers constituting the resource region may be a multiple of 2, a multiple of 3, or a multiple of 5.

For example, additionally, the instructions may cause the first device to receive an inter-device feedback transmission for the inter-device transmission by using an inter-device feedback resource. For example, a candidate resource group of the inter-device feedback resource may be selected based on the inter-device transmission being modulated based on the second modulation scheme.

For example, additionally, the instructions may cause the first device to transmit, to the second device, information for a first resource region to which the first modulation scheme is applied and information for a second resource region to which the second modulation scheme is applied; and transmit, to the second device, correlation information related to the first resource region and the second resource region.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

According to an embodiment of the present disclosure, a non-transitory computer-readable storage medium storing instructions may be proposed. For example, the instructions, based on being executed, may cause a first device to: perform, to a second device, an inter-device control channel transmission related to a first inter-device transmission, modulated based on a first modulation scheme, wherein the first modulation scheme may be a modulation scheme based on a time-frequency domain; and perform, to the second device, the first inter-device transmission modulated based on a second modulation scheme, wherein the second modulation scheme may be a modulation scheme based on a delay-Doppler domain.

FIG. 18 shows a procedure of operations that may be performed by a second device according to an embodiment of the present disclosure. The embodiment of FIG. 18 may be combined with various embodiments of the present disclosure.

Referring to FIG. 18, in step S1810, a second device may receive, from a first device, an inter-device control channel transmission related to a first inter-device transmission, modulated based on a first modulation scheme. For example, the first modulation scheme may be a modulation scheme based on a time-frequency domain. In step S1820, the second device may receive, from the first device, the first inter-device transmission modulated based on a second modulation scheme. For example, the second modulation scheme may be a modulation scheme based on a delay-Doppler domain.

For example, the second modulation scheme may be an orthogonal time frequency space modulation scheme.

The embodiment described above may be applied to various devices described below. First, a processor 202 of a second device 200 may control a transceiver 206 to receive, from a first device 100, an inter-device control channel transmission related to a first inter-device transmission, modulated based on a first modulation scheme. For example, the first modulation scheme may be a modulation scheme based on a time-frequency domain. Second, the processor 202 of the second device 200 may control the transceiver 206 to receive, from the first device 100, the first inter-device transmission modulated based on a second modulation scheme. For example, the second modulation scheme may be a modulation scheme based on a delay-Doppler domain.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: receive, from a first device, an inter-device control channel transmission related to a first inter-device transmission, modulated based on a first modulation scheme, wherein the first modulation scheme may be a modulation scheme based on a time-frequency domain; and receive, from the first device, the first inter-device transmission modulated based on a second modulation scheme, wherein the second modulation scheme may be a modulation scheme based on a delay-Doppler domain.

For example, the second modulation scheme may be an orthogonal time frequency space modulation scheme.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

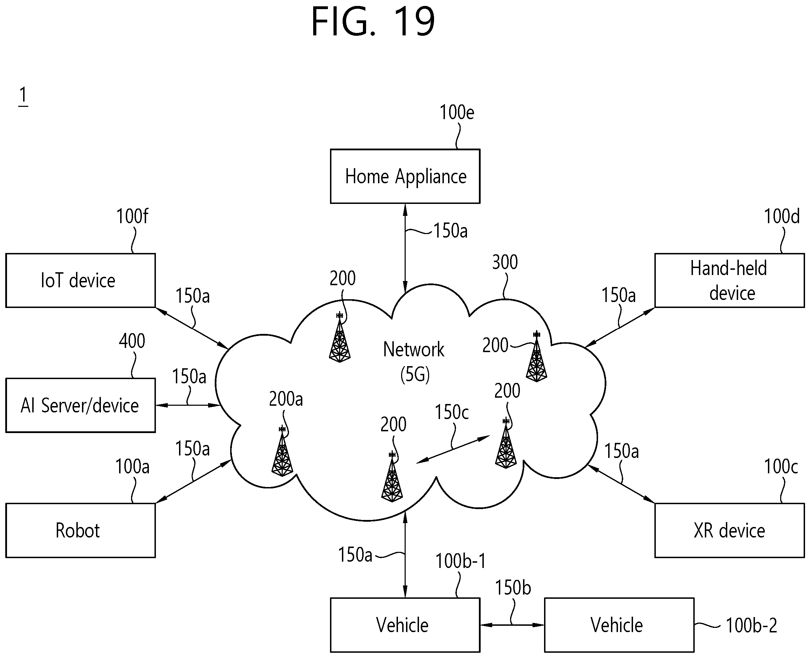

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

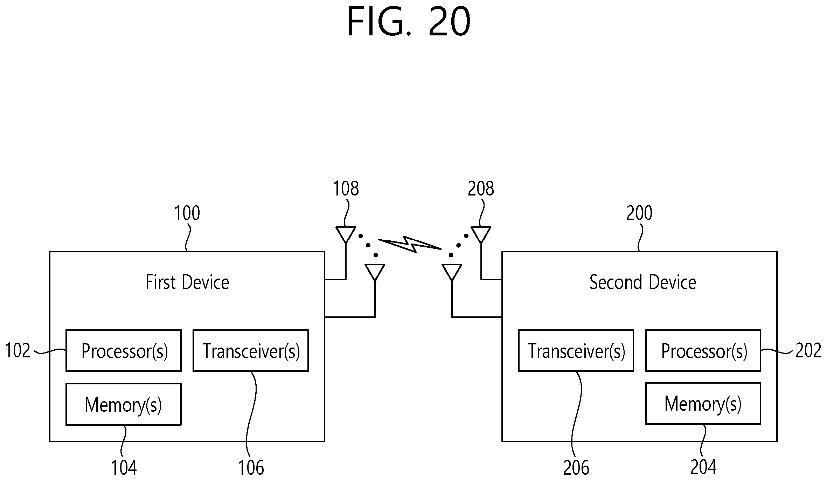

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

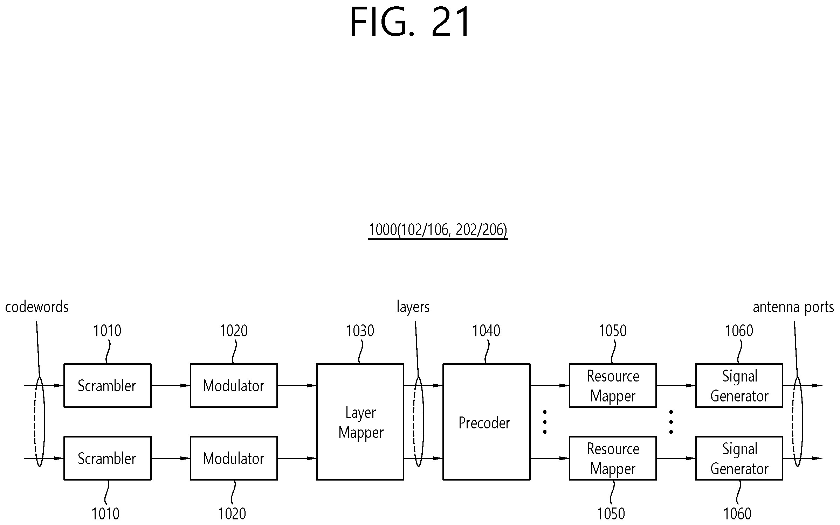

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

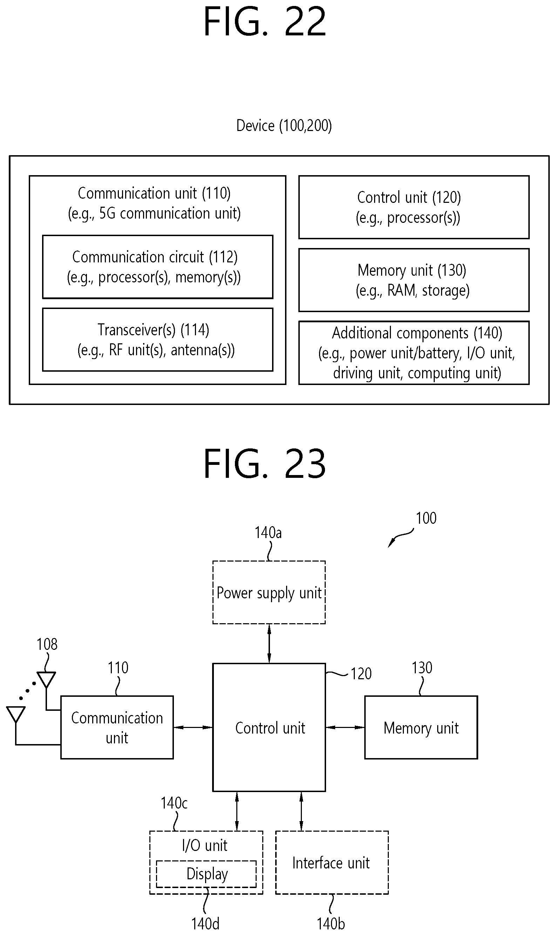

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

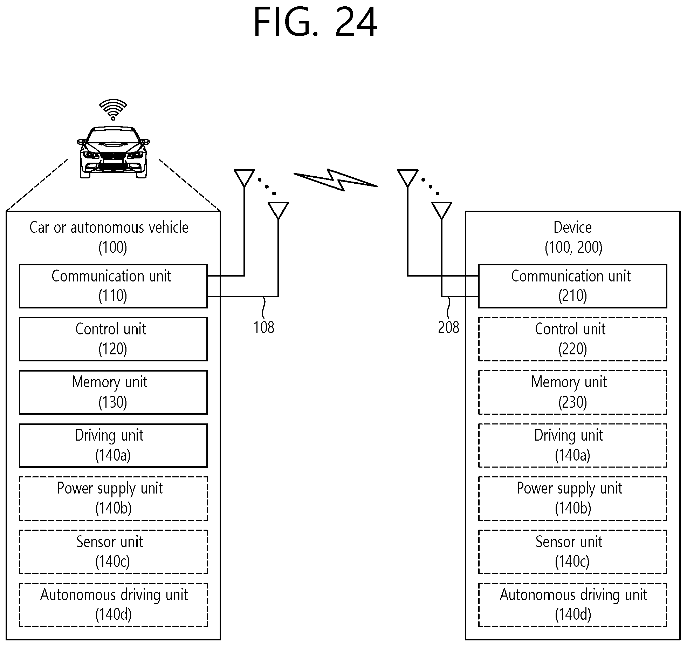

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
performing, to a second device, an inter-device control channel transmission related to a first inter-device transmission, modulated based on a first modulation scheme,
wherein the first modulation scheme is a modulation scheme based on a time-frequency domain; and
performing, to the second device, the first inter-device transmission modulated based on a second modulation scheme,
wherein the second modulation scheme is a modulation scheme based on a delay-Doppler domain.

2. The method of claim 1, wherein the first modulation scheme is an orthogonal frequency division multiplexing modulation scheme.

3. The method of claim 1, wherein the second modulation scheme is an orthogonal time frequency space modulation scheme.

4. The method of claim 1, wherein the second modulation scheme is an orthogonal chirp division multiplexing modulation scheme.

5. The method of claim 1, further comprising:
performing a reference signal transmission related to the first inter-device transmission, modulated based on the second modulation scheme.

6. The method of claim 5, wherein a reference signal transmitted through the reference signal transmission is shared between a second inter-device transmission different from the first inter-device transmission and the first inter-device transmission.

7. The method of claim 5, wherein a second resource used for the reference signal transmission is allocated separately from a first resource used for the first inter-device transmission.

8. The method of claim 1, wherein information for a modulation scheme related to the inter-device transmission is transmitted through the inter-device control channel transmission.

9. The method of claim 1, wherein information related to a resource region related to the inter-device transmission is transmitted through the inter-device control channel transmission, and
wherein a number of symbols constituting the resource region is a multiple of 2, a multiple of 3, or a multiple of 5.

10. The method of claim 1, wherein information related to a resource region related to the inter-device transmission is transmitted through the inter-device control channel transmission, and
wherein a number of subcarriers constituting the resource region is a multiple of 2, a multiple of 3, or a multiple of 5.

11. The method of claim 1, further comprising:
receiving an inter-device feedback transmission for the inter-device transmission by using an inter-device feedback resource,
wherein a candidate resource group of the inter-device feedback resource is selected based on the inter-device transmission being modulated based on the second modulation scheme.

12. The method of claim 1, further comprising:
transmitting, to the second device, information for a first resource region to which the first modulation scheme is applied and information for a second resource region to which the second modulation scheme is applied; and
transmitting, to the second device, correlation information related to the first resource region and the second resource region.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
perform, to a second device, an inter-device control channel transmission related to a first inter-device transmission, modulated based on a first modulation scheme,
wherein the first modulation scheme is a modulation scheme based on a time-frequency domain; and
perform, to the second device, the first inter-device transmission modulated based on a second modulation scheme,
wherein the second modulation scheme is a modulation scheme based on a delay-Doppler domain.

15. A processing device adapted to control a first device comprising:
at least one processor; and
at least one memory connected to the at least one processor and storing instructions,
wherein the instructions, based on being executed by the at least one processor, cause the first device to:
perform, to a second device, an inter-device control channel transmission related to a first inter-device transmission, modulated based on a first modulation scheme,
wherein the first modulation scheme is a modulation scheme based on a time-frequency domain; and
perform, to the second device, the first inter-device transmission modulated based on a second modulation scheme,
wherein the second modulation scheme is a modulation scheme based on a delay-Doppler domain.

16. A non-transitory computer-readable storage medium storing instructions that, based on being executed, cause a first device to:
perform, to a second device, an inter-device control channel transmission related to a first inter-device transmission, modulated based on a first modulation scheme,
wherein the first modulation scheme is a modulation scheme based on a time-frequency domain; and
perform, to the second device, the first inter-device transmission modulated based on a second modulation scheme,
wherein the second modulation scheme is a modulation scheme based on a delay-Doppler domain.

17. A method comprising:
receiving, from a first device, an inter-device control channel transmission related to a first inter-device transmission, modulated based on a first modulation scheme,
wherein the first modulation scheme is a modulation scheme based on a time-frequency domain; and
receiving, from the first device, the first inter-device transmission modulated based on a second modulation scheme,
wherein the second modulation scheme is a modulation scheme based on a delay-Doppler domain.

18. The method of claim 17, wherein the second modulation scheme is an orthogonal time frequency space modulation scheme.

19. A second device comprising:
at least one transceiver;
at least one processor; and
at least one memory connected to the at least one processor and storing instructions,
wherein the instructions, based on being executed by the at least one processor, cause the second device to:
receive, from a first device, an inter-device control channel transmission related to a first inter-device transmission, modulated based on a first modulation scheme,
wherein the first modulation scheme is a modulation scheme based on a time-frequency domain; and
receive, from the first device, the first inter-device transmission modulated based on a second modulation scheme,
wherein the second modulation scheme is a modulation scheme based on a delay-Doppler domain.

20. The second device of claim 19, wherein the second modulation scheme is an orthogonal time frequency space modulation scheme.
